# EUROPEAN PATENT APPLICATION

(11) **EP 2 052 617 A2**
(43) Date of publication of application: **29.04.2009**
(21) Application number: 08166537.4
(22) Date of filing: 14.10.2008
(51) Int. Cl.: A21C 3/08

(54) **Device for plaiting strands of dough or similar**

(30) Priority: 24.10.2007 FI 20070797
(71) Applicant: Julin, Martti, 08350 Routio (FI)
(72) Inventor: Julin, Martti, 08350 Routio (FI)
(74) Representative: Laitinen, Pauli Sakari

(57) **Abstract**

Device for plaiting elongated strands of material, particularly dough strands, comprising dough-strand holders (2) for gripping the dough strands and rotating them through essentially a right angle for plaiting the dough strands. The device includes a separate rotating device (3) with an arm, for rotating each holder (2). The holders (2) together with the rotating devices (3) can be turned to a desired amount, mainly to 90 degrees to each other/the other, for gripping and rotating the dough strands.

## Description

The present invention relates to a device for plaiting strands of dough or similar. More specifically, the invention relates to a device that can plait so-called four-strand loaves.

At present in the bakery industry loaves of bread and coffee bread are made either by hand or mechanically. However, mechanical plaiting means using separate strands of dough. In mechanical plaiting, there are other limitations, for example, that no machine exists for performing so-called 2/4 plaiting. The said plaiting refers to plaiting, in which a four-strand plait is made using two lengths of dough, which in certain areas is very popular and used almost solely.

The invention is generally based on making the plaiting using two lengths of dough and plaiting the plait using four strands. In that case, two lengths of dough are bent in the middle against each other, thus forming four strands of dough. The strands of dough are plaited using a dough-strand holder, in the same way as by hand, by lifting the dough strands over each other in a specific sequence.

The plaiting machine according to the present invention is extremely reliable and easy to maintain, because many so-called standard component are used in the plaiting machine and the number of components is relatively small. The necessary washing and cleaning are taken into account in the operation of the device. The plaiting can be easily adjusted, if the properties of the dough change. The shaping of the end of the plait takes place without loss of material.

The present invention is intended to create a device, with the aid of which the type of plaiting referred to above can generally be performed and also four-strand plaiting using two dough lengths can be automated and a product the same as a handmade one obtained while nevertheless keeping production costs well under control.

The aforementioned and other benefits and advantages of the present invention are achieved in the manner stated to be characteristic in the accompanying

The invention is described in greater detail with the aid of the accompanying drawings.

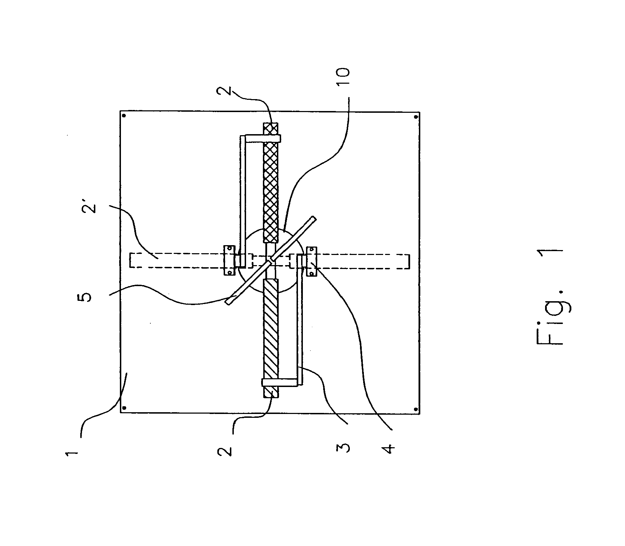

Figure 1 shows a top view of the device according to the invention;
Figure 2 shows a side view of the device of Figure 1;
Figure 3 shows an end view of the device according to the invention; and
Figure 4 shows a more detailed view of the adjustable dough-strand holder.

The invention is described with reference to all of the accompanying drawings, which show one well-regarded embodiment of the invention, without the invention being in any way being restricted to it.

The invention shown here comprises a device, which forms dough strands into a completed long loaf. The plaiting machine includes, in the direction of the progress of the process, a dough-strand-feed part, at the start of which there are places ready for the dough strands, which for reasons of clarity are not drawn in the figures. After the feed conveyor, there is a conveyor and shaping part 1, in which the actual shaping of the dough strands takes place. The figures show this part.

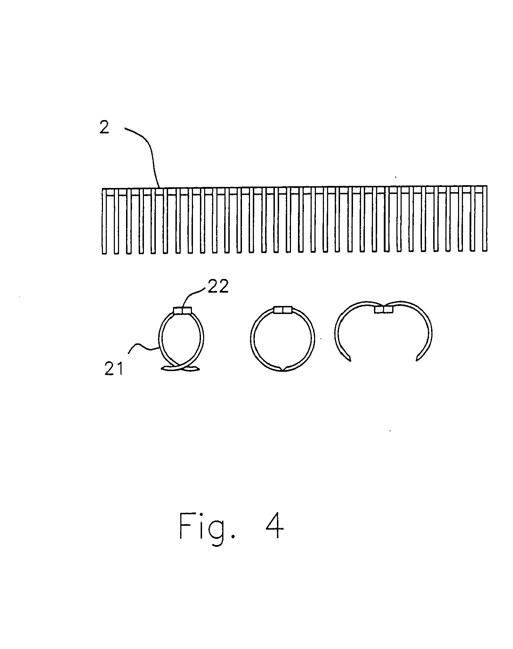

In the shaping component 1 are two lifting devices 3, which move the adjustable dough-strand holders 2, belonging to the shaping part, with the aid rotation cylinders 4, drawn by way of example. The general shape of the holders 2 is shown particularly in Figure 4, from which it can be clearly seen that the holders are formed of numerous arms 21 that move against each other around a pivot point 22, and which can open and close in the manner shown in Figure 4. In the closed position, it is assumed that the dough strand is inside the closed space formed by the arms 21.

The dough lengths are either taken automatically to the holder 2, or placed in the holder by hand in the first stage. After this, the dough strands are brought to the shaping point. In shaping, the adjustable dough-strand holders 2, together with the dough strands, are moved crosswise over the plaiting point. In other words, the half of the dough length located on the left is lifted to the right and that on the right is lifted to the left. Reference number 5 shows schematically a curved holder piece, with the aid of which it is possible to hold onto the dough strands, when the first plaiting operation is started.

In the figures, the position of the holders is drawn as being directly opposite to each other. In practice, the paths of the holders must pass each other, in order for a complete rotation to be performed. This passing is not drawn in the figures, but its arrangement naturally belongs to the normal knowledge of persons involved with technology.

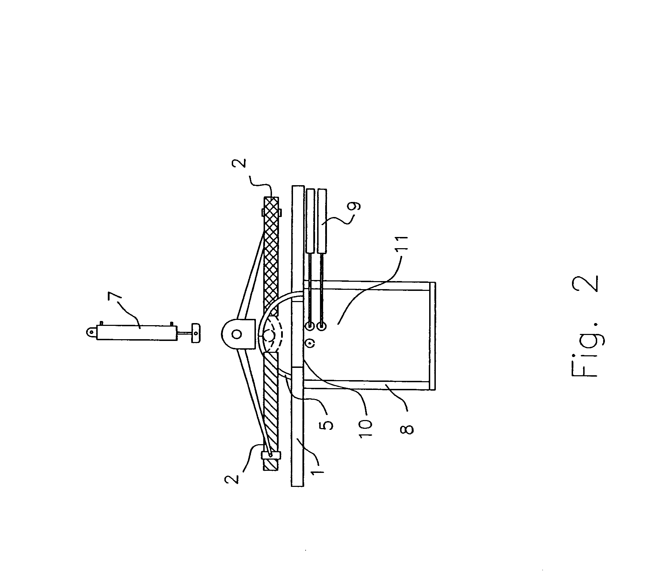

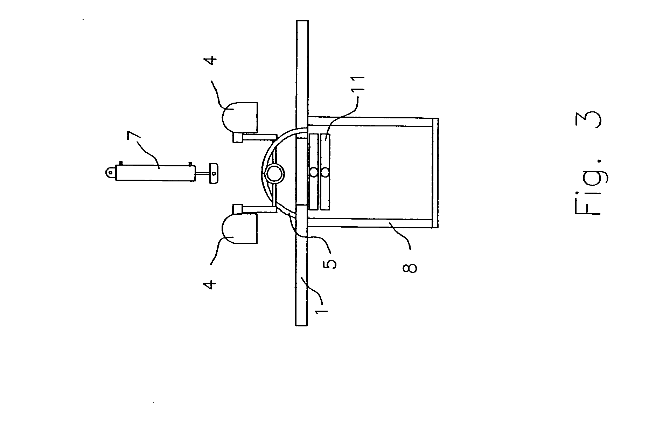

A plaiting pusher 7, which is located essentially on top of the plaiting point, and which can be seen best in Figures 2 and 3, ensures that the dough strands, together with the dough-strand holders 2, remain at the plaiting point and also move the plaiting forwards one step at a time. The pusher is only shown schematically and as such does not correspond to the real operating form. The operating power for the pusher 7 is any known form of power. For example, compressed air is the conventional operating medium, on account of its general availability.

Next, the lifting device with the holders is rotated through 90 degrees and the same operation is repeated with the previous dough strand essentially crosswise to the dough strand and thus the second dough strand too is plaited crosswise with the second dough strand too with the previous strand, so that the next joint of the long loaf is formed. After that, the lifting device with the holder is rotated back through 90 degrees and the next step is made, once again on the first dough strand. The reference number 2' is used to show schematically how the same holders are operated in the crosswise handling of the dough strand.

The finished plaited product is detached from the shaping device from below, through a hole 10 in the centre of the component 1, onto the removal conveyor.

The space that the conveyor comprises, but in which, for reasons of clarity, it is not drawn, is marked with the reference number 8.

To recapitulate, the invention operates as follows. The ready dough lengths are loaded by hand or by an automatic loader into the adjustable dough-strand holders 2. The dough-strand holders 2, together with the dough strands, move to the plaiting point. Plaiting takes place by moving the adjustable holders of the dough strands crosswise alternately at the plaiting point while the plaiting pusher 7 moves the plaiting point forwards at each step. The compressive, i.e. holding force of the adjustable dough-strand holders can be adjusted at each plaiting step. As already stated above, the adjustment is shown in the end view of the holder in Figure 4.

Before the plaited product moves to the removal conveyor, the end of the product is shaped by a shaping device 11, which is formed, as is best seen from Figure 2, of rollers that move horizontally and press crosswise, being moved by operating cylinders 9. The ends of the plait are turned in a flatten form to the side. Thus the last portion at the end of the product is turned under the product and the end result is aesthetically beautiful.

Obviously, the width of the device according to the invention will increase if the length of the dough strands increases. However, the other properties will not alter.

As the last stage, the finished plaited product travels to the removal conveyor. After this, the process can start again from the beginning.

The invention can be varied in many ways, without deviating from the basic principle and inventive idea of the invention.

It is obvious, that the invention is suitable for plaiting not only dough strands, but also any elongated and flexible material whatever. In principle, the device according to the invention can also be applied to elongated material with more than four strands for plaiting.

## Claims

1. Device for plaiting dough strands or similar, comprising a conveyor for feeding the strands to a plaiting station, and a removal device, mainly a conveyor, for removing the plaited product from the shaping station, and holders (2) for griping the dough strands, **characterized in that** the holders (2) can be rotated over the top through essentially a right angle, for turning the dough strands with them and also together with rotating devices (3) to another position in the plane, particularly at essentially a right angle to each other/the other dough strands, for gripping and turning them.

2. Device according to claim 1, **characterized in that** there is a separate rotating device (3) with an arm, for each holder (2).

3. Device according to any of the above claims, **characterized in that** the shaping part (1) of the device comprises an opening (10) essential below the plaiting station, for removing the finished product through it.

4. Device according to claim 1, **characterized in that** it also comprises a shaping device (11) underneath the shaping part (1), for shaping the ends of the plaited product.

5. Device according to claim 1, **characterized by** a pusher (7), for moving the plaited product as the plaiting progresses and for holding the dough strands stationary during plaiting.

6. Device according to any of the above claims, **characterized in that** the holder (2) is formed as two rows of curved bar-like elements (21) curved towards each other around a pivot point (22).
